# EUROPEAN PATENT SPECIFICATION

(11) **EP 2 757 258 B1**
(45) Date of publication and mention of the grant of the patent: **16.01.2019**
(21) Application number: 12832152.8
(22) Date of filing: 14.09.2012
(51) Int. Cl.: F03D 1/06, F03D 7/02

(54) **WIND POWER GENERATOR**
WINDKRAFTGENERATOR
GÉNÉRATEUR D'ÉNERGIE ÉOLIENNE

(30) Priority: 15.09.2011 JP 2011201560
(43) Date of publication of application: 23.07.2014
(73) Proprietor: Kabushiki Kaisha Toshiba, Minato-ku, Tokyo 105-8001 (JP)
(72) Inventor: Matsuda, Hisashi, Yokohama-shi, Kanagawa 230-0045 (JP); Tanaka, Motofumi, Yokohama-shi, Kanagawa 230-0045 (JP); Goshima, Shohei, Yokohama-shi, Kanagawa 230-0045 (JP); Wada, Kunihiko, Yokohama-shi, Kanagawa 230-0045 (JP); Ozaki, Tamon, Yokohama-shi, Kanagawa 230-0045 (JP); Osako, Toshiki, Yokohama-shi, Kanagawa 230-0045 (JP)
(74) Representative: Hoffmann Eitle
(86) International application number: PCT/JP2012/005886
(87) International publication number: WO 2013/038699

(56) References cited:
- EP-A2- 2 340 995
- JP-A- S6 328 793
- JP-A- H05 155 384
- JP-A- 2007 317 656
- JP-A- 2008 290 711
- JP-A- 2009 511 360
- JP-A- 2011 163 352
- JP-A- 2011 163 352
- US-A1- 2010 329 838
- US-A1- 2011 142 681

## Description

### TECHNICAL FIELD

Embodiments described herein relate generally to a wind power generation apparatus having airflow generation devices which generate an airflow by operation of discharge plasma.

### BACKGROUND ART

Currently, in view of global warming prevention, introduction of regenerated energy power generation system is in progress on a global scale. In such a situation, wind power generation is one of power generation methods which are growing more popular.

However, in the wind power generation, the amount of generated power depends on wind velocity fluctuations and wind direction fluctuations. Accordingly, in a region having a mountain climate where the wind velocity and wind direction change rapidly such as in Japan, it is difficult to stably maintain power generation output. This is one of the causes hindering introduction of wind power generation system. Accordingly, development of stable and highly efficient wind power generation system is demanded.

An actual wind turbine is affected by natural wind whose velocity and direction fluctuate largely, and thus the rotation speed of the wind turbine changes over time. Focusing attention on a blade cross section (blade element) at a certain position of a wind turbine blade, the blade element is affected by a merged flow of a main flow toward a wind turbine blade and a relative flow generated by rotation of the wind turbine blade itself. Accordingly, when the rotation speed of the wind turbine changes by a change of velocity or direction of the main flow (wind surrounding the wind turbine), the inflow angle, that is, angle of attack of the merged flow with respect to the wind turbine blade changes.

In general, the lift of a blade depends on the angle of attack, and as the angle of attack becomes larger, the lift increases. However, when the angle of attack increases to be equal to or larger than a certain threshold, a flow on a suction side of the blade separates and the lift decreases (stall state).

In an actual wind turbine, the angle of attack changes frequently according to fluctuations of wind velocity and wind direction, and when the angle of attack exceeds the threshold, flow separation occurs frequently. This decreases wind turbine torque and lowers power generation efficiency. In a conventional wind turbine, pitch control and yaw control could not respond to a fluctuation of wind for a short period of time. Thus, the power generation becomes unstable, and a highly efficient wind power generation system could not have been realized.

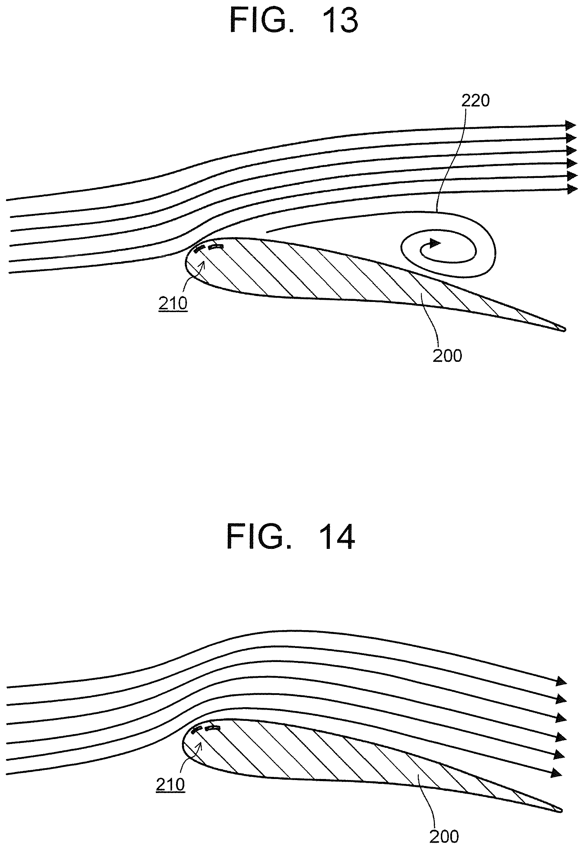

Accordingly, there has been studied a technology to install an airflow generation device which generates an airflow by discharge plasma on a wind turbine blade surface, so as to control the flow of wind flowing on the blade surface. Here, FIG. 13 and FIG. 14 are diagrams schematically illustrating flows on a blade surface of a general blade 200. FIG. 13 is a state that an airflow generation device 210 provided on the blade surface is not activated, and a flow separates from the blade surface (separating portion 220). On the other hand, in FIG. 14 the airflow generation device 210 is activated from the state of FIG. 13 to generate an airflow, so as to suppress flow separation on the blade surface.

There has been found a possibility of stably obtaining wind turbine torque by generating an airflow on the blade surface in this manner, and thereby suppressing a separated flow around the blade, even when wind velocity and wind direction fluctuate.

US 2010/329838 A1 is concerned with a discharge plasma actuator. JP 2011 163352 A is concerned with a control method for a wind power generation system. EP 2 340 995 A2 is concerned with a plasma actuator.

### REFERENCES

### Patent References

Reference 1: JP-A 2008-025434 (KOKAI)

### SUMMARY

### PROBLEMS TO BE SOLVED BY THE INVENTION

In an actual wind turbine, the chord length of a wind turbine blade is about 1 to 4 m. Also in such a large wind turbine blade, it is demanded to install the airflow generation device which generates an airflow by discharge plasma on a wind turbine blade surface, so as to securely suppress flow separation on the blade surface.

To securely suppress flow separation on the blade surface of the large wind turbine blade, for example, it is necessary to generate an airflow with a large flow rate and flow velocity. In the airflow generation device, it is necessary to largely increase input power in order to generate the airflow with a large flow rate and flow velocity.

Accordingly, there has been a problem that power consumption in the airflow generation device increases, and efficiency as a wind power generation system decreases.

An object to be solved by the present invention is to provide a wind power generation apparatus capable of suppressing power consumption in an airflow generation device, and securely suppressing flow separation on a blade surface, thereby improving efficiency.

### MEANS FOR SOLVING THE PROBLEMS

A wind power generation apparatus of an embodiment according to the present invention is defined in claim 1.

### BRIEF DESCRIPTION OF THE DRAWINGS

FIG. 1 is a perspective view schematically illustrating a wind power generation apparatus of a first embodiment.
FIG. 2 is a perspective view schematically illustrating one of wind turbine blades of the wind power generation apparatus of the first embodiment.
FIG. 3 is a view schematically illustrating an A-A cross section of FIG. 2 illustrating the wind turbine blade of the wind power generation apparatus of the first embodiment.
FIG. 4 is a perspective view schematically illustrating one of wind turbine blades, which have a different structure, of the wind power generation apparatus of the first embodiment.
FIG. 5 is a perspective view schematically illustrating one of wind turbine blades of a wind power generation apparatus of a second embodiment.
FIG. 6 is a view schematically illustrating a B-B cross section of FIG. 5 illustrating the wind turbine blade of the wind power generation apparatus of the second embodiment.
FIG. 7 is a perspective view schematically illustrating one of wind turbine blades of a wind power generation apparatus of a third embodiment.
FIG. 8 is a view schematically illustrating a C-C cross section of FIG. 7 illustrating the wind turbine blade of the wind power generation apparatus of the third embodiment.
FIG. 9 is a perspective view schematically illustrating one of wind turbine blades of a wind power generation apparatus of a fourth embodiment.
FIG. 10 is a view schematically illustrating a D-D cross section of FIG. 9 illustrating the wind turbine blade of the wind power generation apparatus of the fourth embodiment.
FIG. 11 is a perspective view schematically illustrating one of wind turbine blades of a wind power generation apparatus of a fifth embodiment.
FIG. 12 is a view schematically illustrating an E-E cross section of FIG. 11 illustrating the wind turbine blade of the wind power generation apparatus of the fifth embodiment.
FIG. 13 is a view schematically illustrating flows on a blade surface of a general blade.
FIG. 14 is a view schematically illustrating flows on the blade surface of the general blade.

### DESCRIPTION OF EMBODIMENTS

Hereinafter, embodiments of the present invention will be described with reference to the drawings.

### (First Embodiment)

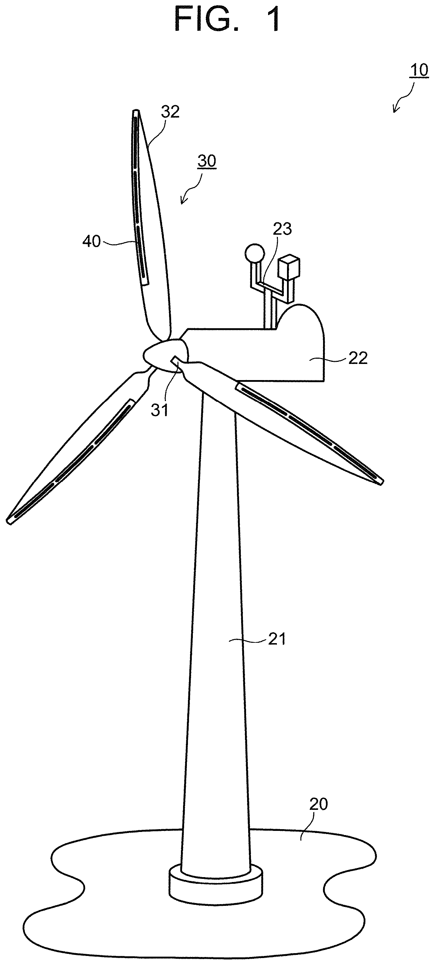

FIG. 1 is a perspective view schematically illustrating a wind power generation apparatus 10 of a first embodiment. As illustrated in FIG. 1, in the wind power generation apparatus 10, a nacelle 22 housing a generator (not illustrated) and so on is attached to a top portion of a tower 21 installed on a ground 20. On an upper surface of the nacelle 22, an aerovane 23 which measures a direction and velocity of wind is provided.

Further, a rotor 30 is attached to a rotation shaft of the generator which projects from the nacelle 22. This rotor 30 has a hub 31 and wind turbine blades 32 attached to this hub 31. The wind turbine blades 32 have a divided blade structure divided in a chord length direction and are provided to have, for example, a variable pitch angle. Note that although an example of having three wind turbine blades 32 is illustrated here, the number of wind turbine blades is not limited. On a leading edge portion of a wind turbine blade 32, a plurality of airflow generation devices 40 are provided at predetermined intervals in a direction from a blade root to a blade tip of the wind turbine blade 32.

Next, the structure of the wind turbine blades 32 will be described.

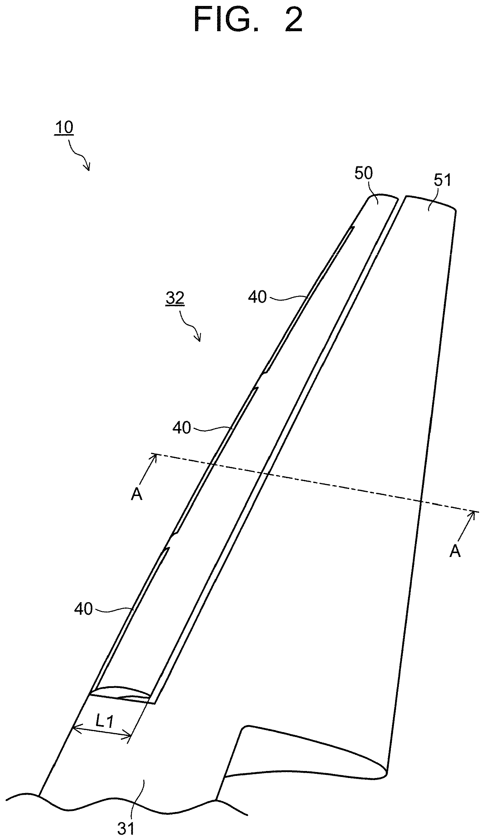

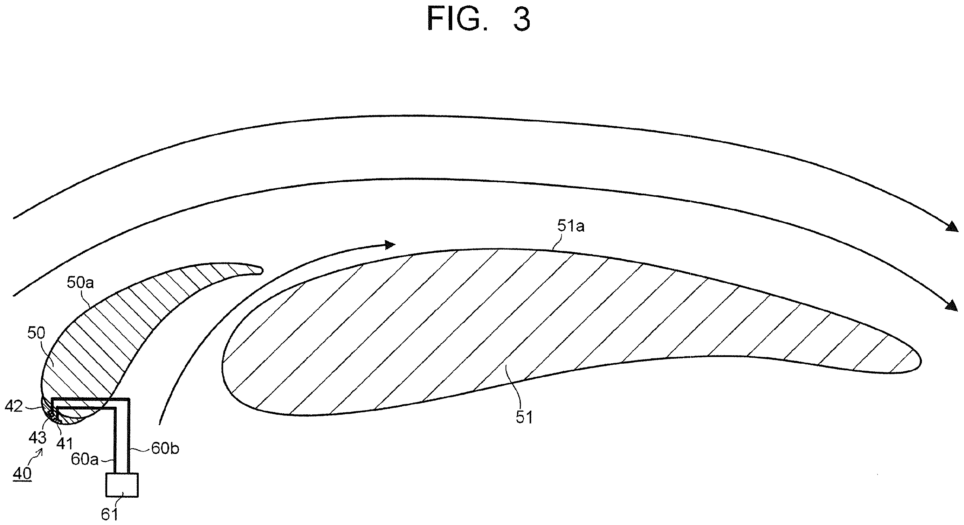

FIG. 2 is a perspective view schematically illustrating one of the wind turbine blades 32 of the wind power generation apparatus 10 of the first embodiment. FIG. 3 is a view schematically illustrating an A-A cross section of FIG. 2 illustrating the wind turbine blade 32 of the wind power generation apparatus 10 of the first embodiment.

Note that in FIG. 3 , a flow on a surface of the wind turbine blade 32 is denoted by an arrow. Further, although the structure of one wind turbine blade 32 will be described here, the other wind turbine blades 32 have the same structure.

As illustrated in FIG. 2 , the wind turbine blade 32 has a shape such that its chord length gradually shortens from the blade root toward the blade tip. Further, the wind turbine blade 32 is divided in two in the chord length direction, and has a front divided blade 50 as a divided blade on a leading edge side and a base blade 51. That is, the wind turbine blade 32 has divided parts in a blade span direction from the blade root toward the blade tip, which include the front divided blade 50 and the base blade 51 extending in the blade span direction. The base blade 51 is attached to the rotation shaft via the hub 31. Further, the front divided blade 50 and the base blade 51 have an airfoil shape as illustrated in FIG. 3 . Note that the base blade 51 functions as a first blade and the front divided blade 50 functions as a second blade.

The front divided blade 50 is fixed so that a gap is formed between itself and the base blade 51, and also has a function as what is called a slat. Here, the front divided blade 50 is fixed with the angle of attack and/or the like being adjusted to an optimum angle based on, for example, results of numerical analysis of flow assuming that the wind power generation apparatus 10 is in operation, and the like. Note that the front divided blade 50 is fixed so that the angle of attack and/or the like can be adjusted to an optimum angle under an environment where the wind power generation apparatus 10 is installed.

A chord length L1 of the front divided blade 50 is not more than 1 m even at a longest portion. By having the chord length L1 in this range, a Reynolds number Re (reference of chord length) of the flow along the front divided blade 50 can be of the order of 10 <5>. By generating an airflow from the airflow generation devices 40, separated flow can be suppressed on the blade surface of the wind turbine blade 32 to improve lift. It has become clear from studies of the present inventors that this effect rapidly decreases when the Reynolds number Re is of the order of 10⁶. On the other hand, by making the Reynolds number Re of the order of 10⁵, the lift of the wind turbine blade 32 can be increased by 10 percent to 30 percent or more. Furthermore, by having the chord length L1 in this range so as to suppress flow separation along the front divided blade 50, power consumption when an airflow is generated by the airflow generation devices 40 can be suppressed.

Here, as illustrated in FIG. 3, the airflow generation devices 40 provided on the leading edge portion of the front divided blade 50 has a first electrode 41 and a second electrode 43 provided separately from this first electrode 41 via a dielectric 42. Note that the first electrode 41 and the second electrode 43 function as a pair of electrodes.

The first electrode 41 is constituted of, for example, a plate-shaped conductive member. The shape of the first electrode 41 is not limited to the plate shape, and may be, for example, a rod shape or the like having a cross section which is circular, rectangular, or the like.

Similarly to the first electrode 41, the second electrode 43 is constituted of, for example, a plate-shaped conductive member. The shape of the second electrode 43 is not limited to the plate shape, and may be, for example, a rod shape or the like having a cross section which is circular, rectangular, or the like. Note that the second electrode 43 may have the same shape as the first electrode 41.

Further, as illustrated in FIG. 3, the second electrode 43 is disposed separately from the first electrode 41 at a position which is deeper than the first electrode 41 from the surface of the dielectric 42 and is displaced more than the first electrode 41 in a direction of airflow. By disposing the airflow generation devices 40 in this manner, the airflow generated by the airflow generation devices 40 flows toward the second electrode 43 side from the first electrode 41 side.

Examples of the dielectric material constituting the dielectric 42 include inorganic insulators such as alumina, glass, mica which are electrical insulating materials, organic insulators such as polyimide, glass epoxy, rubber, and Teflon (registered trademark), and the like, but it is not limited in particular. The dielectric material constituting the dielectric 42 can be chosen appropriately from dielectric materials constituted of a publicly known solid according to the purpose and environment of use.

Here, the airflow generation devices 40 include the first electrode 41 provided so that its one surface is on the same plane as the surface of the dielectric 42, and the second electrode 43 embedded in the dielectric 42. Note that the first electrode 41 may be structured to be embedded in the dielectric 42, that is, one surface of the first electrode 41 is not exposed to the outside.

Further, when the airflow generation devices 40 are provided on the leading edge portion of the front divided blade 50, as illustrated in FIG. 3, preferably, for example, the first electrode 41 is disposed so that an end edge on the second electrode 43 side of the first electrode 41 is on the leading edge of the front divided blade 50. Then, preferably, the second electrode 43 is disposed at a position closer to a suction side 50a of the front divided blade 50 than the first electrode 41. In this case, the airflow flows from the leading edge of the front divided blade 50 toward the suction side 50a of the blade surface.

Note that the structure of the airflow generation devices 40 is not limited to them, and for example, a groove may be formed in the leading edge portion of the front divided blade 50, and in this groove an airflow generation device 40 constituted of a first electrode 41, a dielectric 42, and a second electrode 43 disposed separately from the first electrode 41 via the dielectric 42 may be installed by fitting therein. At this time, in order to prevent disturbance of the flow, preferably, the airflow generation devices 40 are disposed so as not to project from the surface of the leading edge portion. In this case, when the front divided blade 50 is constituted of, for example, a dielectric material such as GFRP (glass fiber reinforced plastics) made by solidifying glass fibers with synthetic resin, the front divided blade 50 itself may be made to function as the dielectric 42. Specifically, the first electrode 41 may be disposed directly on the surface of the front divided blade 50, and the second electrode 43 may be embedded directly in the front divided blade 50 and separately from this first electrode 41.

A plurality of airflow generation devices 40 are disposed, for example, as illustrated in FIG. 2, independently in the blade span direction from the blade root of the front divided blade 50 toward the blade tip. In this case, the airflow generation devices 40 may each be controlled independently, or the same control may be performed on the plurality of airflow generation devices 40. Note that when the blade span is small, for example, one airflow generation device 40 can be disposed in the blade span direction on the leading edge portion of the front divided blade 50.

The first electrode 41 and the second electrode 43 are, as illustrated in FIG. 3, electrically connected to a discharge power supply 61 functioning as a voltage application mechanism via cable wirings 60a, 60b, respectively. By activating this discharge power supply 61, voltage is applied between the first electrode 41 and the second electrode 43.

The discharge power supply 61 is provided, for example, inside the nacelle 22. The discharge power supply 61 applies voltage to the airflow generation devices 40 via, for example, the cable wirings 60a, 60b which are wired via the hub 31 and the inside of the wind turbine blade 32. Note that a rotor part and a stator part are electrically connected by, for example, a brush or a discharge gap.

The discharge power supply 61 outputs voltage having a waveform which is, for example, pulsed (positive polarity, negative polarity, bipolarity of positive and negative (alternating voltage)) or alternated (sine wave, intermittent sine wave). The discharge power supply 61 is capable of applying voltage between the first electrode 41 and the second electrode 43 while varying electric voltage characteristics such as voltage value, frequency, current waveform, duty ratio, and/or the like.

Next, flows on the blade surface of the wind turbine blade 32 will be described.

When flows adhere around the wind turbine blade 32, lift occurs to the wind turbine blade 32 due to a difference between the flow velocity on a blade upper surface and the flow velocity on a blade lower surface. When the angle of attack of the wind turbine blade 32 is increased, the lift increases, but when it is equal to or more than a certain angle of attack, for example, the flow separates from the blade upper surface of the front divided blade 50, which decreases the lift.

At this time, voltage is applied between the first electrode 41 and the second electrode 43 by the discharge power supply 61 to generate an airflow along the blade upper surface, which changes a flow velocity distribution in a blade boundary layer, thereby suppressing occurrence of flow separation. Further, it is also possible to decrease noises, vibrations, and the like due to any other aerodynamic phenomenon.

Further, as illustrated in FIG. 3, the lift of the entire wind turbine blade 32 is improved by a flow from the gap between the front divided blade 50 and the base blade 51 toward a suction side 51a of the base blade 51.

Note that in the airflow generation devices 40, as described above, voltage is applied between the first electrode 41 and the second electrode 43, and when it reaches a potential difference equal to or more than a certain threshold, discharge is induced between the first electrode 41 and the second electrode 43. This discharge is called barrier discharge, and low-temperature plasma is generated.

In this discharge, energy can be given only to electrons in a gas, and thus the air can be ionized to generate electrons and ions with almost no heating of the air. The generated electrons and ions are driven by an electric field and collide with gas molecules. Thus, the momentum of the electrons and ions is transferred to the gas molecules. That is, by applying discharge, an airflow occurs along the surface of the dielectric 42 from the vicinity of the electrodes. The magnitude and direction of this airflow can be controlled by varying voltage to be applied between the electrodes, electric voltage characteristics such as frequency, current waveform, duty ratio, and/or the like.

As described above, by the wind power generation apparatus 10 of the first embodiment, flow separation on the blade upper surface of the front divided blade 50 can be suppressed by providing the airflow generation devices 40 on the leading edge portion of the front divided blade 50 and generating the airflow. This can improve efficiency.

Further, by the wind turbine blade 32 with the divided blade structure having the front divided blade 50 and the base blade 51, power consumption of the airflow generation devices 40 can be suppressed, which are made to function so as to suppress flow separation along the front divided blade 50. Moreover, the lift of the entire wind turbine blade 32 is improved by the flow from the gap between the front divided blade 50 and the base blade 51 toward the suction side of the base blade 51.

Thus, the wind power generation apparatus 10 of the first embodiment is capable of performing highly efficient and stable wind power generation.

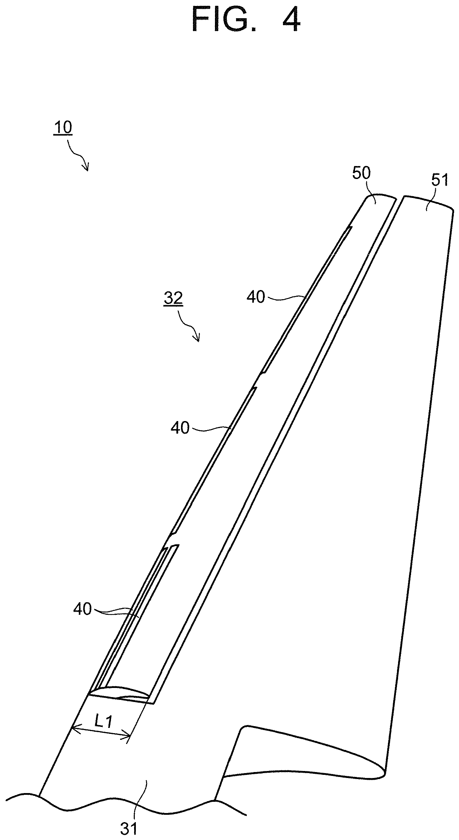

Here, the wind power generation apparatus 10 of the first embodiment is not limited to the above-described structure. FIG. 4 is a perspective view schematically illustrating one of wind turbine blades 32, which have a different structure, of the wind power generation apparatus 10 of the first embodiment.

As illustrated in FIG. 4, a plurality of airflow generation devices 40 may be provided at predetermined intervals in a direction from the leading edge to a trailing edge of the front divided blade 50. Here, as the airflow generation device 40 provided to be closest to the blade root, two airflow generation devices 40 are provided in a direction from the leading edge to the trailing edge of the front divided blade 50. Note that also at another position, a plurality of airflow generation devices 40 may be provided in the direction from the leading edge to the trailing edge of the front divided blade 50.

Thus, by having the plurality of airflow generation devices 40 in the direction from the leading edge to the trailing edge of the front divided blade 50, airflows having a large flow rate and flow velocity can be generated. Further, by having such a structure, for example, flow separation or the like can be suppressed more securely on the blade root side where the chord length is long.

Note that the structure having the plurality of airflow generation devices 40 in the direction from the leading edge to the trailing edge of the divided blade can also be applied to other embodiments which will be described below, and can thereby obtain the same operation and effect.

### (Second Embodiment)

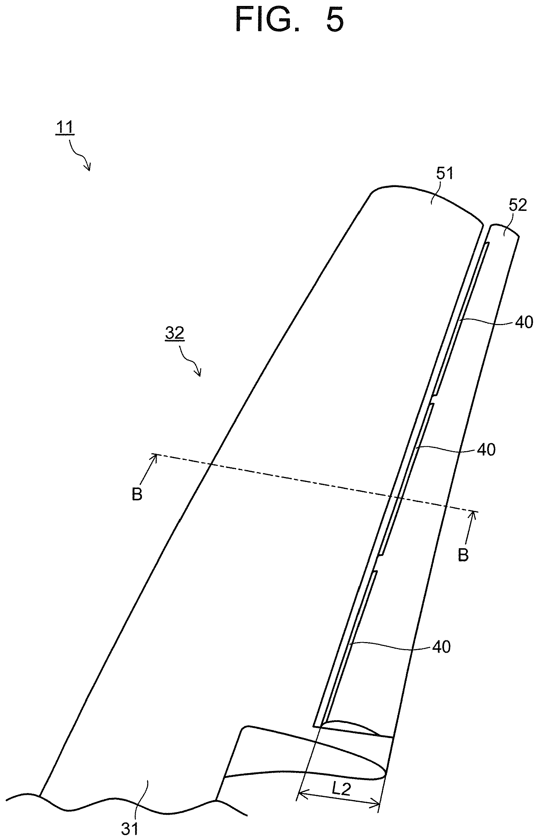

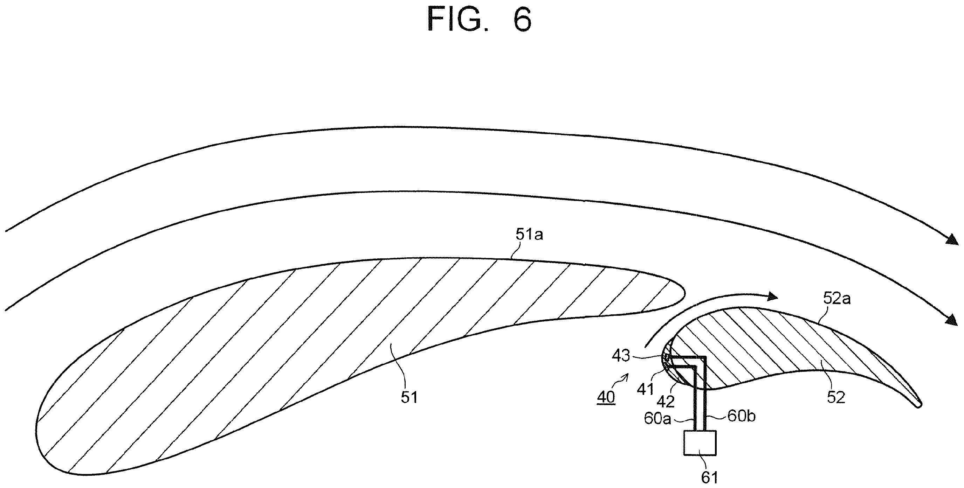

FIG. 5 is a perspective view schematically illustrating one of wind turbine blades 32 of a wind power generation apparatus 11 of a second embodiment. FIG. 6 is a view schematically illustrating a B-B cross section of FIG. 5 illustrating the wind turbine blade 32 of the wind power generation apparatus 11 of the second embodiment. Note that in FIG. 6, a flow on a surface of the wind turbine blade 32 is denoted by an arrow. Further, the same structural parts as those of the wind power generation apparatus 10 of the first embodiment are given the same reference numerals, and duplicated descriptions are omitted or simplified (the same applies to the following embodiments).

The wind turbine blade 32 of the wind power generation apparatus 11 of the second embodiment is, as illustrated in FIG. 5, divided in two in the chord length direction, and has a base blade 51 and a rear divided blade 52 as a divided blade on the trailing edge side. That is, the wind turbine blade 32 has divided parts in a blade span direction from the blade root toward the blade tip, which include the base blade 51 and the rear divided blade 52 extending in the blade span direction. The base blade 51 is attached to the rotation shaft via the hub 31. Further, the base blade 51 and the rear divided blade 52 have an airfoil shape as illustrated in FIG. 6. Note that the rear divided blade 52 functions as a second blade.

The rear divided blade 52 is fixed so that a gap is formed between itself and the base blade 51, and also has a function as what is called a flap. Here, the rear divided blade 52 is fixed with the angle of attack and/or the like being adjusted to an optimum angle based on, for example, results of numerical analysis of flows assuming that the wind power generation apparatus 11 is in operation. Note that the rear divided blade 52 is fixed so that the angle of attack and/or the like can be adjusted to an optimum angle under an environment where the wind power generation apparatus 10 is installed.

Preferably, a chord length L2 of the rear divided blade 52 is not more than 1 m even at a longest portion for the same reason as the reason of having the range of the chord length L1 of the front divided blade 50 in the first embodiment.

On a leading edge portion of the rear divided blade 52, as illustrated in FIG. 5, a plurality of airflow generation devices 40 are provided at predetermined intervals in a direction from the blade root to the blade tip of the wind turbine blade 32. The structure, installation method, and the like of the airflow generation devices 40 are the same as those of the first embodiment.

Thus, flow separation on the blade upper surface of the rear divided blade 52 can be suppressed by providing the airflow generation devices 40 on the leading edge portion of the rear divided blade 52 and generating the airflow. This can improve efficiency.

Further, by the wind turbine blade 32 with the divided blade structure having the base blade 51 and the rear divided blade 52, power consumption of the airflow generation devices 40 can be suppressed, which are made to function so as to suppress flow separation along the rear divided blade 52.

Moreover, as illustrated in FIG. 6, the lift of the entire wind turbine blade 32 is improved by the flow from the gap between the base blade 51 and the rear divided blade 52 toward the suction side 52a of the rear divided blade 52.

Thus, the wind power generation apparatus 11 of the second embodiment is capable of performing highly efficient and stable wind power generation.

Note that a plurality of airflow generation devices 40 may be provided on a leading edge portion of the base blade 51 in the direction from the blade root to the blade tip of the wind turbine blade 32. Thus, flow separation on the blade upper surface of the base blade 51 can be suppressed.

### (Third Embodiment)

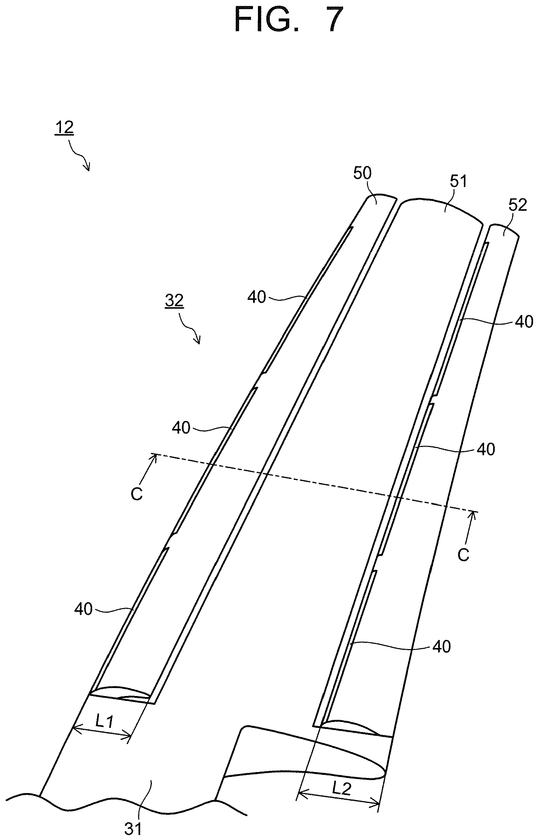

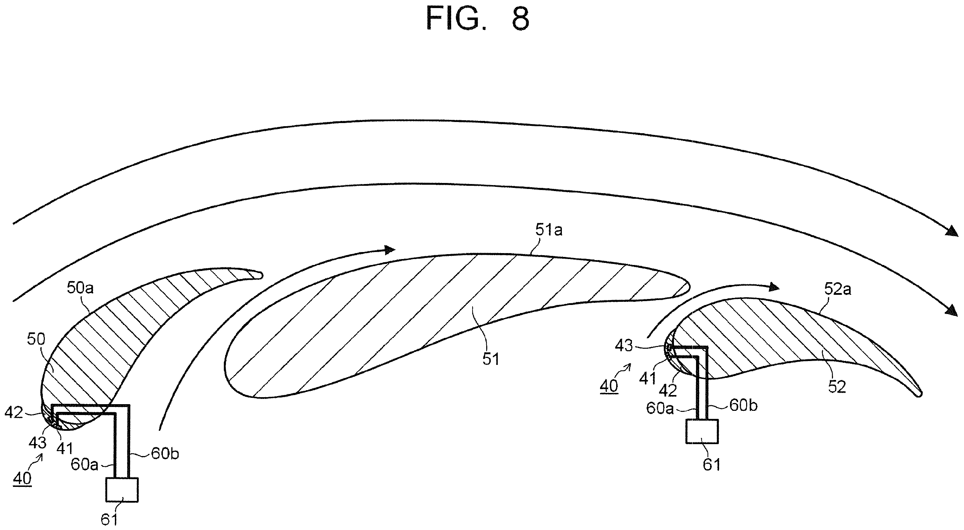

FIG. 7 is a perspective view schematically illustrating one of wind turbine blades 32 of a wind power generation apparatus 12 of a third embodiment. FIG. 8 is a view schematically illustrating a C-C cross section of FIG. 7 illustrating the wind turbine blade 32 of the wind power generation apparatus 12 of the third embodiment. Note that in FIG. 8, a flow on a surface of the wind turbine blade 32 is denoted by an arrow.

The wind turbine blade 32 of the wind power generation apparatus 12 of the third embodiment is, as illustrated in FIG. 7, divided into three in the chord length direction, and has a front divided blade 50 as a divided blade on the leading edge side, a base blade 51, and a rear divided blade 52 as a divided blade on the trailing edge side. That is, the wind turbine blade 32 has divided parts in a blade span direction from the blade root toward the blade tip, which include the front divided blade 50, the base blade 51, and the rear divided blade 52 extending in the blade span direction. The base blade 51 is attached to the rotation shaft via the hub 31. Further, the front divided blade 50, the base blade 51 and the rear divided blade 52 have an airfoil shape as illustrated in FIG. 8.

Here, the front divided blade 50 is structured as described in the first embodiment, and the rear divided blade 52 is structured as described in the second embodiment.

On a leading edge portion of each of the front divided blade 50 and the rear divided blade 52, as illustrated in FIG. 7, a plurality of airflow generation devices 40 are provided at predetermined intervals in a direction from the blade root to the blade tip of the wind turbine blade 32. The structure, installation method, and the like of the airflow generation devices 40 are the same as those of the first embodiment.

Thus, flow separation on the blade upper surfaces of the front divided blade 50 and the rear divided blade 52 can be suppressed by providing the airflow generation devices 40 on the leading edge portions of the front divided blade 50 and the rear divided blade 52 and generating the airflow. This can improve efficiency.

Further, by the wind turbine blade 32 with the divided blade structure having the front divided blade 50, the base blade 51, and the rear divided blade 52, power consumption of the airflow generation devices 40 can be suppressed, which are made to function so as to suppress flow separation along the front divided blade 50 and the rear divided blade 52.

Moreover, as illustrated in FIG. 8, the lift of the entire wind turbine blade 32 is improved by the flow from the gap between the front divided blade 50 and the base blade 51 toward the suction side 51a of the base blade 51, and the flow from the gap between the base blade 51 and the rear divided blade 52 toward the suction side 52a of the rear divided blade 52.

Thus, the wind power generation apparatus 12 of the third embodiment is capable of performing highly efficient and stable wind power generation.

### (Fourth Embodiment)

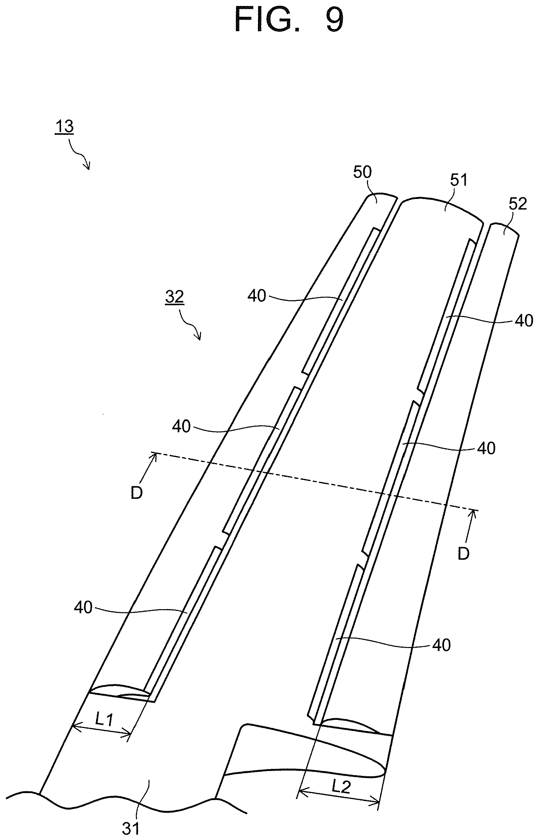

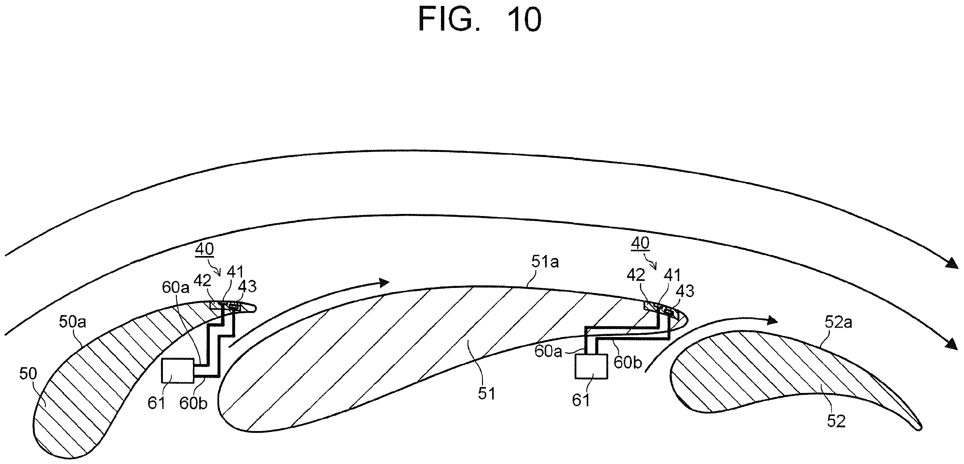

FIG. 9 is a perspective view schematically illustrating one of wind turbine blades 32 of a wind power generation apparatus 13 of a fourth embodiment. FIG. 10 is a view schematically illustrating a D-D cross section of FIG. 9 illustrating the wind turbine blade 32 of the wind power generation apparatus 13 of the fourth embodiment. Note that in FIG. 10, a flow on a surface of the wind turbine blade 32 is denoted by an arrow.

The wind turbine blade 32 of the wind power generation apparatus 13 of the fourth embodiment is, as illustrated in FIG. 9, divided into three in the chord length direction, and has a front divided blade 50 as a divided blade on the leading edge side, a base blade 51, and a rear divided blade 52 as a divided blade on the trailing edge side. Note that the structures of the front divided blade 50, the base blade 51, and the rear divided blade 52 are the same as those of the third embodiment.

On a trailing edge portion of each of the front divided blade 50 and the base blade 51, as illustrated in FIG. 9, a plurality of airflow generation devices 40 are provided at predetermined intervals in a direction from the blade root to the blade tip of the wind turbine blade 32. The structure of the airflow generation devices 40 is the same as that of the first embodiment.

Here, as illustrated in FIG. 10, the airflow generation devices 40 include the first electrode 41 provided so that its one surface is on the same plane as the blade surface of the front divided blade 50 and the base blade 51, and the second electrode 43 embedded in the dielectric 42. Note that the first electrode 41 may be structured to be embedded in the dielectric 42, that is, one surface of the first electrode 41 is not exposed to the outside. Note that the first electrode 41 and the second electrode 43 function as a pair of electrodes.

Further, when the thickness of the airflow generation devices 40 constituted of the first electrode 41, the dielectric 42, and the second electrode 43 is small and does not affect the flow when it is mounted on the blade surface, the airflow generation devices 40 may be disposed on the blade surface.

The airflow generated from the airflow generation devices 40 installed in this manner flows on blade surfaces of suction sides 50a, 51a of the front divided blade 50 and the base blade 51 toward the trailing edge.

Thus, by providing the airflow generation devices 40 on the trailing edge portions of the front divided blade 50 and the base blade 51 and generating the airflow, the flow on the trailing edge portion where a separated flow occurs easily is dragged to the blade surface side. Accordingly, occurrence of large-scale separated flow can be suppressed. This can improve efficiency.

Further, by the wind turbine blade 32 with the divided blade structure having the front divided blade 50, the base blade 51, and the rear divided blade 52, as illustrated in FIG. 10, there occur a flow from the gap between the front divided blade 50 and the base blade 51 toward the suction side 51a of the base blade 51 and a flow from the gap between the base blade 51 and the rear divided blade 52 toward the suction side 52a of the rear divided blade 52. The lift of the entire wind turbine blade 32 is improved by these flows.

Thus, the wind power generation apparatus 13 of the fourth embodiment is capable of performing highly efficient and stable wind power generation.

### (Fifth Embodiment)

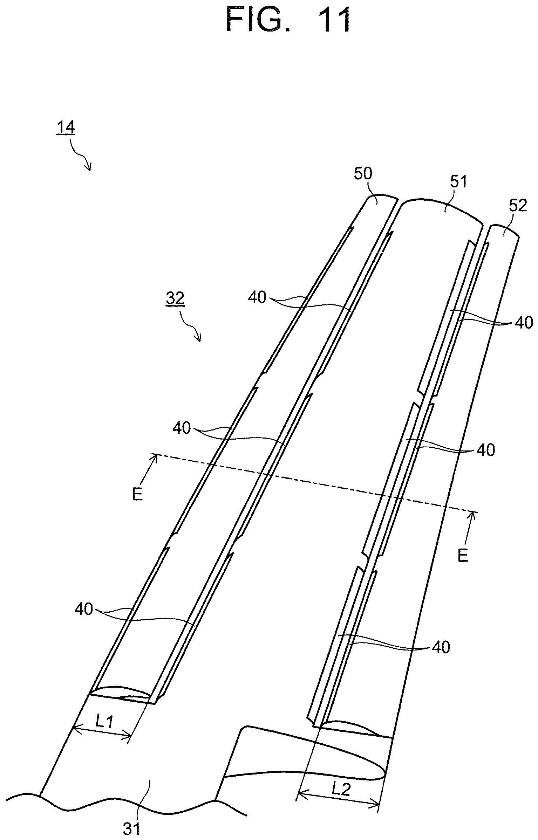

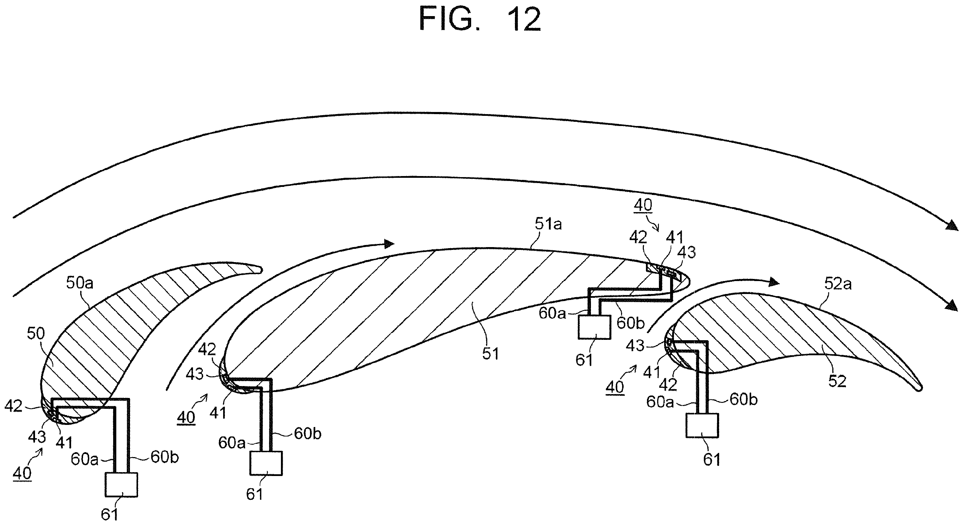

FIG. 11 is a perspective view schematically illustrating one of wind turbine blades 32 of a wind power generation apparatus 14 of a fifth embodiment. FIG. 12 is a view schematically illustrating an E-E cross section of FIG. 11 illustrating the wind turbine blade 32 of the wind power generation apparatus 14 of the fifth embodiment. Note that in FIG. 12, a flow on a surface of the wind turbine blade 32 is denoted by an arrow.

The wind turbine blade 32 of the wind power generation apparatus 14 of the fifth embodiment is, as illustrated in FIG. 11, divided into three in the chord length direction, and has a front divided blade 50 as a divided blade on the leading edge side, a base blade 51, and a rear divided blade 52 as a divided blade on the trailing edge side. Note that the structures of the front divided blade 50, the base blade 51, and the rear divided blade 52 are the same as those of the third embodiment.

On a leading edge portion of each of the front divided blade 50, the base blade 51, and the rear divided blade 52, as illustrated in FIG. 11, a plurality of airflow generation devices 40 are provided at predetermined intervals in a direction from the blade root to the blade tip of the wind turbine blade 32. Further, on a trailing edge portion of the base blade 51, as illustrated in FIG. 11, a plurality of airflow generation devices 40 are provided at predetermined intervals in the direction from the blade root to the blade tip of the wind turbine blade 32.

Note that the structure of the airflow generation devices 40 is the same as the structure in the first embodiment. Further, the installation method of the airflow generation devices 40 is the same as the installation method of the first embodiment when the airflow generation devices 40 are provided on the leading edge portion, or is the same as the installation method of the fourth embodiment when the airflow generation devices 40 are provided on the trailing edge portion.

Thus, by providing the airflow generation devices 40 on the leading edge portions of the front divided blade 50, the base blade 51, and the rear divided blade 52 and generating the airflow, flow separation on the blade upper surfaces of the front divided blade 50, the base blade 51 and the rear divided blade 52 can be suppressed. This can improve efficiency.

Further, by the wind turbine blade 32 with the divided blade structure having the front divided blade 50, the base blade 51, and the rear divided blade 52, power consumption of the airflow generation devices 40 can be suppressed, which are made to function so as to suppress flow separation along the front divided blade 50, the base blade 51, and the rear divided blade 52.

Moreover, by providing the airflow generation devices 40 on the trailing edge portion of the base blade 51 and generating the airflow, the flow on the trailing edge portion where a separated flow occurs easily is dragged to the blade surface side. Accordingly, occurrence of large-scale separated flow can be suppressed. This can improve efficiency.

Further, by the wind turbine blade 32 with the divided blade structure having the front divided blade 50, the base blade 51, and the rear divided blade 52, as illustrated in FIG. 12, there occurs a flow from the gap between the front divided blade 50 and the base blade 51 toward the suction side 51a of the base blade 51 and a flow from the gap between the base blade 51 and the rear divided blade 52 toward the suction side 52a of the rear divided blade 52. The lift of the entire wind turbine blade 32 is improved by these flows.

Thus, the wind power generation apparatus 14 of the fifth embodiment is capable of performing highly efficient and stable wind power generation.

Note that in the above-described embodiments, examples of having the airflow generation devices 40 in the leading edge portion and/or the trailing edge portion of the divided wind turbine blade 32 are illustrated, but for example, the airflow generation devices 40 may be provided in any other blade surface portion where flow separation occurs.

The embodiments as have been described above make it possible to suppress power consumption in an airflow generation device, and securely suppress flow separation on a blade surface, thereby improving efficiency.

Several embodiments of the present invention have been described, but these embodiments are presented as examples, and are not intended to limit the scope of the invention.

## Claims

1. A wind power generation apparatus, comprising:
wind turbine blades (32) each having, in a chord length direction, a first blade (51) fixed to a rotation shaft and a second blade (50) fixed in a pivotally adjustable manner;
a pair of electrodes (41, 43) disposed separately via a dielectric (42) on a blade surface of the second blade (50); and
a voltage application mechanism (61) capable of applying voltage between the pair of electrodes (41, 43), **characterised in that**: the second blade (50) is fixed so that a fluid flow gap is formed between the second blade (50) and the first blade (51), and **in that** a chord length (L1) of the second blade (50) is not more than 1 m even at a longest portion.

2. The wind power generation apparatus according to claim 1,
wherein a plurality of the second blades (50) are provided.

3. The wind power generation apparatus according to claim 1 or 2,
wherein the pair of electrodes (41, 43) is disposed on a leading edge portion of the blade surface of the second blade (50).

4. The wind power generation apparatus according to any one of claims 1 to 3, wherein the pair of electrodes (41, 43) is disposed on a trailing edge portion of the blade surface of the second blade (50).

5. The wind power generation apparatus according to claim 3 or 4,
wherein a plurality of the pairs of the electrodes (41, 43) are disposed at predetermined intervals in a direction from a blade root toward a blade tip of the blade surface of the second blade (50).

6. The wind power generation apparatus according to any one of claims 3 to 5,
wherein a plurality of the pairs of electrodes (41, 43) are disposed at predetermined intervals in a direction from a leading edge toward a trailing edge of the blade surface of the second blade (50).

## Patentansprüche

1. Windkraftgeneratoreinrichtung, umfassend:
Windturbinenblätter (32), die jeweils in einer Richtung einer Sehnenlänge ein erstes Blatt (51), das an einer Drehwelle befestigt ist, und ein zweites Blatt (50), das schwenkverstellbar befestigt ist, aufweisen;
ein Elektrodenpaar (41, 43), das getrennt über ein Dielektrikum (42) auf einer Blattfläche des zweiten Blattes (50) angeordnet ist; und
einen Mechanismus zum Anlegen einer Spannung (61), der imstande ist, eine Spannung zwischen dem Elektrodenpaar (41, 43) anzulegen,
**dadurch gekennzeichnet, dass**: das zweite Blatt (50) so befestigt ist, dass ein Fluidstromspalt zwischen dem zweiten Blatt (50) und dem ersten Blatt (51) gebildet ist, und dadurch, dass eine Sehnenlänge (L1) des zweiten Blattes (50) nicht mehr als 1 m beträgt, selbst an einem längsten Abschnitt.

2. Windkraftgeneratoreinrichtung nach Anspruch 1,
wobei eine Vielzahl der zweiten Blätter (50) bereitgestellt sind.

3. Windkraftgeneratoreinrichtung nach Anspruch 1 oder 2,
wobei das Elektrodenpaar (41, 43) auf einem vorderen Kantenabschnitt der Blattfläche des zweiten Blattes (50) angeordnet ist.

4. Windkraftgeneratoreinrichtung nach einem der Ansprüche 1 bis 3, wobei das Elektrodenpaar (41, 43) auf einem hinteren Kantenabschnitt der Blattfläche des zweiten Blattes (50) angeordnet ist.

5. Windkraftgeneratoreinrichtung nach Anspruch 3 oder 4,
wobei eine Vielzahl der Elektrodenpaare (41, 43) in vorbestimmten Abständen in einer Richtung von einer Blattwurzel zu einer Blattspitze der Blattfläche des zweiten Blattes (50) angeordnet sind.

6. Windkraftgeneratoreinrichtung nach einem der Ansprüche 3 bis 5,
wobei eine Vielzahl der Elektrodenpaare (41, 43) in vorbestimmten Abständen in einer Richtung von einer vorderen Kante zu einer hinteren Kante der Blattfläche des zweiten Blattes (50) angeordnet sind.

## Revendications

1. Appareil de génération d'énergie éolienne, comprenant :
des pales d'éolienne (32) présentant chacune, dans une direction de longueur de corde, une première pale (51) fixée à un arbre de rotation et une seconde pale (50) fixée de manière ajustable en pivotement ;
une paire d'électrodes (41, 43) disposées séparément via un diélectrique (42) sur une surface de pale de la seconde pale (50) ; et
un mécanisme d'application de tension (61) apte à appliquer la tension entre la paire d'électrodes (41, 43),
**caractérisé en ce que** : la seconde pale (50) est fixée de sorte qu'une fente de flux de fluide soit formée entre la seconde pale (50) et la première pale (51), et **en ce qu'**une longueur de corde (L1) de la seconde pale (50) n'est pas supérieure à 1 m même sur une portion la plus longue.

2. Appareil de génération d'énergie éolienne selon la revendication 1, dans lequel une pluralité de secondes pales (50) est prévue.

3. Appareil de génération d'énergie éolienne selon la revendication 1 ou 2, dans lequel la paire d'électrodes (41, 43) est disposée sur une portion de bord d'attaque de la surface de pale de la seconde pale (50).

4. Appareil de génération d'énergie éolienne selon l'une quelconque des revendications 1 à 3, dans lequel la paire d'électrodes (41, 43) est disposée sur une portion de bord de fuite de la surface de pale de la seconde pale (50).

5. Appareil de génération d'énergie éolienne selon la revendication 3 ou 4, dans lequel une pluralité des paires des électrodes (41, 43) est disposée à intervalles prédéterminés dans une direction d'un pied de pale vers une pointe de pale de la surface de pale de la seconde pale (50).

6. Appareil de génération d'énergie éolienne selon l'une quelconque des revendications 3 à 5,
dans lequel une pluralité des paires d'électrodes (41, 43) est disposée à des intervalles prédéterminés dans une direction d'un bord d'attaque vers un bord de fuite de la surface de pale de la seconde pale (50).
